# EUROPÄISCHE PATENTSCHRIFT

(11) **EP 4 245 662 B1**
(45) Veröffentlichungstag und Bekanntmachung des Hinweises auf die Patenterteilung: **22.07.2026**
(21) Anmeldenummer: 23162513.8
(22) Anmeldetag: 17.03.2023
(51) Int. Cl.: B64D 11/00, B64D 11/06, B60N 2/90

(54) **FLUGZEUGSITZVORRICHTUNG**
AIRCRAFT SEATING DEVICE
DISPOSITIF DE SIÈGE D'AVION

(30) Priorität: 18.03.2022 DE 102022106467
(43) Veröffentlichungstag der Anmeldung: 20.09.2023
(73) Patentinhaber: Recaro Aircraft Seating GmbH & Co. KG, 74523 Schwäbisch Hall (DE)
(72) Erfinder: Behr, Florian, 71131 Jettingen (DE); Müller, Michael, 74545 Michelfeld (DE)
(74) Vertreter: Daub, Thomas

(56) Entgegenhaltungen:
- WO-A1-2016/096873
- WO-A1-2019/018027
- DE-T2- 60 023 413
- US-A1- 2016 304 012
- US-B2- 10 640 027
- US-B2- 7 631 938

## Beschreibung

### Stand der Technik

Die Erfindung betrifft eine Flugzeugsitzvorrichtung nach dem Oberbegriff des Patentanspruchs 1.

Es ist bereits eine Flugzeugsitzvorrichtung mit einer Funktionseinheit, mit einem Verstellmodul, über das die Funktionseinheit zumindest zwischen einer ersten Stellung und einer zweiten Stellung verstellbar ist, mit einem Kraftunterstützungsmodul, das dazu vorgesehen ist, in einem betätigten Zustand eine Unterstützungskraft auf das Verstellmodul auszuüben, um eine Verstellbewegung der Funktionseinheit zwischen der ersten Stellung und der zweiten Stellung zu unterstützen, wobei das Kraftunterstützungsmodul dazu zumindest einen Kraftspeicher aufweist, vorgeschlagen worden. Der Stand der Technik wird beispielsweise durch das Dokument DE-T2-600 23 413 veranschaulicht.

Die Aufgabe der Erfindung besteht insbesondere darin, eine gattungsgemäße Vorrichtung mit verbesserten Eigenschaften hinsichtlich eines Komforts für einen Passagier bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Flugzeugsitzvorrichtung mit einer Funktionseinheit, mit einem Verstellmodul, über das die Funktionseinheit zumindest zwischen einer ersten Stellung und einer zweiten Stellung verstellbar ist, mit einem Kraftunterstützungsmodul, das dazu vorgesehen ist, in einem betätigten Zustand eine Unterstützungskraft auf das Verstellmodul auszuüben, um eine Verstellbewegung der Funktionseinheit zwischen der ersten Stellung und der zweiten Stellung zu unterstützen, wobei das Kraftunterstützungsmodul dazu zumindest einen Kraftspeicher aufweist.

Es wird vorgeschlagen, dass das Kraftunterstützungsmodul ein Betätigungsgetriebe mit einem beweglich gelagerten Kurvenelement aufweist, wobei das Kurvenelement eine Nockenbahn ausbildet und dazu vorgesehen ist, die Unterstützungskraft in einer Abhängigkeit einer Verstellposition zu variieren. Unter einer "Flugzeugsitzvorrichtung" soll eine Vorrichtung verstanden werden, die zumindest einen Teil eines Flugzeugsitzes oder einen Teil eines Flugzeugsitzmoduls ausbildet. Ein Flugzeugsitzmodul ist vorzugsweise ein Modul mit einem Flugzeugsitz und weiteren Bauteilen, wie beispielsweise einem Umhausungselement, einer Konsole oder einen Ottomane. Unter einer "Funktionseinheit" soll ein funktionaler Teil des Flugzeugsitzes oder des Flugzeugsitzmoduls verstanden werden, der von einem Passagier genutzt werden kann. Eine Funktionseinheit kann als ein Bildschirm, als ein Flugzeugsitzelement, wie insbesondere eine Rückenlehne, ein Fußstützelement, oder ein Bankelement, oder als ein anderes zwischen zumindest zwei Stellungen bewegbar gelagertes Bauteil eines Flugzeugsitzes sein, das von einem Passagier zwischen den beiden Stellungen verstellt werden kann. Unter einem "Kraftunterstützungsmodul" soll ein Modul verstanden werden, das zur Unterstützung einer Verstellbewegung einer Funktionseinheit zwischen zumindest zwei Stellungen vorgesehen ist und dazu zumindest eine Unterstützungskraft bereitstellt, die auf die Funktionseinheit wirkt. Unter einer "Unterstützungskraft" soll eine Kraft verstanden werden, die eine Bewegung der Funktionseinheit unterstützt, wobei diese Kraft dabei vorzugsweise eine Verstellbewegung der Funktionseinheit beschleunigen oder verzögern kann. Unter einem "Kraftspeicher" soll ein Element verstanden werden, das dazu vorgesehen ist, in zumindest einem Betätigungszustand eine Betätigungskraft F bereitzustellen. Vorzugsweise ist der Kraftspeicher als ein Federelement ausgebildet, das durch Stauchung entgegen einer Kraftrichtung der Betätigungskraft eine Kraft speichern kann. Der Kraftspeicher kann als eine mechanische Feder ausgebildet sein, die durch eine elastische Verformung eine Betätigungskraft speichert. Vorteilhaft ist der Kraftspeicher als eine Fluiddruckfeder, insbesondere als eine Gasdruckfeder ausgebildet. Unter einem "Betätigungsgetriebe" soll vorzugsweise ein Übersetzungsgetriebe verstanden werden, das eine erste Kraft und/oder Bewegung in eine zweite Kraft und/oder Bewegung umsetzt. Unter einem "Kurvenelement" soll vorzugsweise ein Element verstanden werden, das zumindest eine Erhebung aufweist, die sich von einer Grundfläche des Kurvenelements erhebt. Das Kurvenelement bildet vorzugsweise zumindest einen Teil eines Kurvengetriebes aus.

Vorzugsweise weist das Kurvenelement eine Grundfläche auf, die von einer Mantelfläche eines Kreiszylinders gebildet ist. Das Kurvenelement ist als ein Nockenelement ausgebildet. Unter einer "Nockenbahn" soll eine Oberfläche des Kurvenelements verstanden werden, das zu einem Kontakt mit einem weiteren Element, wie insbesondere einem Betätigungselement vorgesehen ist. Die Nockenbahn ist als eine Kurvenbahn ausgebildet. Die Nockenbahn weist im Bereich der Erhebung entlang ihrer Haupterstreckung vorzugsweise unterschiedliche Winkel zu der Grundfläche des Kurvenelements auf. Unter einer "Verstellposition" soll vorzugsweise insbesondere eine relative Position eines Elements zu einem zweiten Element während eines diskreten Zeitpunkts einer Verstellung verstanden werden. Unter einer Verstellposition des Kurvenelements soll eine relative Position des Kurvenelements zu dem Kraftspeicher bzw. zu einem Betätigungselement, das in Kontakt mit der Nockenbahn steht und eine Betätigungskraft auf das Kurvenelement überträgt, verstanden werden. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Durch eine erfindungsgemäße Ausgestaltung kann vorteilhaft ein Mechanismus bereitgestellt werden, mittels dem ein Funktionsbauteil besonders einfach zwischen zumindest zwei Stellungen verstellt werden kann. Insbesondere kann ein besonders vorteilhafter Mechanismus bereitgestellt werden, in dem eine Unterstützungskraft besonders vorteilhaft in unterschiedlichen Bereichen der Verstellung unterschiedlich wirken und die Verstellung so zu unterschiedlichen Zeitpunkten der Verstellung unterschiedlich unterstützen kann. Weiter wird vorgeschlagen, dass eine Unterstützungskraft in Abhängigkeit eines Winkels der Nockenbahn positiv oder negativ ausgebildet ist. Unter einer "positiven Unterstützungskraft" soll eine Kraft verstanden werden, die eine Verstellbewegung der Funktionseinheit beschleunigt und eine Verstellung dadurch erleichtert. Unter einer "negativen Unterstützungskraft" soll eine Kraft verstanden werden, die eine Verstellbewegung der Funktionseinheit verzögert und so eine Verstellung abbremst. Dadurch kann eine Verstellbewegung der Funktionseinheit besonders vorteilhaft unterstützt werden, insbesondere kann die Unterstützungskraft in Abhängigkeit der aktuellen Position der Funktionseinheit besonders vorteilhaft angepasst werden.

Ferner wird vorgeschlagen, dass das beweglich gelagerte Kurvenelement als eine drehbar gelagerte Nockenscheibe ausgebildet ist. Unter einer "Nockenscheibe" soll eine Scheibe verstanden werden, die an ihrem Außenumfang einen Nocken ausbildet, der eine Kurvenbahn ausbildet. Dadurch kann das Kurvenelement besonders vorteilhaft ausgebildet werden, insbesondere zur Erzeugung einer Unterstützungskraft für eine Verschwenkbewegung des Funktionsbauteils.

Es wird weiterhin vorgeschlagen, dass das als Nockenscheibe ausgebildete Kurvenelement einen Grundkreis aufweist, wobei die Nockenbahn von einer in Umfangsrichtung verlaufenden Kurvenbahn gebildet ist, die variierende Abstände zu dem Grundkreis aufweist. Dadurch kann das als Nockenscheibe ausgebildete Kurvenelement besonders vorteilhaft ausgebildet werden.

Des Weiteren wird vorgeschlagen, dass eine von dem Kraftspeicher auf die Nockenbahn des Kurvenelements ausgeübte Betätigungskraft auf einen Rotationsmittelpunkt des als Nockenscheibe ausgebildeten Kurvenelements ausgerichtet ist. Dadurch kann die auf das Kurvenelement ausgeübte Betätigungskraft besonders vorteilhaft auf das Kurvenelement wirken.

Weiterhin wird vorgeschlagen, dass das Betätigungsgetriebe ein Betätigungselement aufweist, das dazu vorgesehen ist, eine von dem Kraftspeicher bereitgestellte Betätigungskraft auf die Nockenbahn des Kurvenelements zu übertragen. Unter einem "Betätigungselement" soll vorzugsweise ein Element verstanden werden, das zur Übertragung einer Kraft auf ein anderes Element vorgesehen ist und dazu auf einer entsprechenden Fläche des anderen Elements aufliegt. Das Betätigungselement ist vorzugsweise als ein drehbar gelagertes Übertragungsrad ausgebildet, das auf der Nockenbahn des Kurvenelements bei einer Verdrehung des Kurvenelements abrollen kann. Dadurch kann eine Übertragung der Kraft auf das Kurvenelement besonders vorteilhaft erfolgen und vorteilhaft Reibungsverluste bei der Kraftübertragung verringert werden.

Außerdem wird vorgeschlagen, dass das Kraftunterstützungsmodul ein schwenkbar gelagertes Hebelelement aufweist, das dazu vorgesehen ist, eine Betätigungskraft von dem Kraftspeicher auf das Betätigungselement zu übertragen. Dadurch kann eine Betätigungskraft besonders vorteilhaft von dem Kraftspeicher auf das Betätigungselement übertragen werden, wobei die Kraft vorteilhaft übersetzt werden kann.

Es wird weiter vorgeschlagen, dass die Flugzeugsitzvorrichtung zumindest eine Kopplungseinheit aufweist, die das Kraftunterstützungsmodul und das Verstellmodul miteinander funktional koppelt. Unter einer "Kopplungseinheit" soll vorzugsweise eine Einheit verstanden werden, die eine Kraft und Bewegung zwischen zumindest zwei Komponenten überträgt. Die Kopplungseinheit ist dazu vorgesehen, eine Bewegung des Kurvenelements auf das Verstellmodul zu übertragen. Die Kopplungseinheit ist dazu vorgesehen, die von dem Kraftunterstützungsmodul bereitgestellte Unterstützungskraft auf das Verstellmodul zu übertragen. Dadurch kann das Kraftunterstützungsmodul vorteilhaft beabstandet von dem Verstellmodul angeordnet werden, wodurch insbesondere eine vorteilhafte Ausnutzung eines Bauraums erfolgen kann.

Zudem wird vorgeschlagen, dass die Kopplungseinheit von einem Umschlingungselement ausgebildet ist. Unter einem "Umschlingungselement" soll ein Element verstanden werden, das zumindest zwei drehbare Bauteile durch eine Umschlingung miteinander koppelt. Das Umschlingungselement ist vorzugsweise als ein Riemen ausgebildet. Grundsätzlich ist es denkbar, dass das Umschlingungselement als ein einfacher Riemen oder als ein Zahnriemen ausgebildet ist. Grundsätzlich wäre es auch denkbar, dass das Umschlingungselement als eine Kette ausgebildet ist. Dadurch kann die Kopplungseinheit besonders vorteilhaft einfach ausgebildet werden.

Weiter wird vorgeschlagen, dass die Kopplungseinheit als eine Zahnradübersetzung ausgebildet ist. Unter einer "Zahnradübersetzung" soll vorzugsweise eine Übersetzung einer Kraft mittels zumindest zweier ineinandergreifender Zahnräder verstanden werden. Die als Zahnradübersetzung ausgebildete Kopplungseinheit weist vorzugsweise ein erstes Zahnrad, das drehfest mit dem Kurvenelement verbunden ist, und ein in das erste Zahnrad eingreifendes zweites Zahnrad auf, das mit dem Verstellmodul drehfest verbunden ist. Dadurch kann die Kopplungseinheit besonders robust ausgebildet werden. Ferner wird vorgeschlagen, dass das Verstellmodul zumindest einen drehbar gelagerten Haltearm aufweist, an dessen einem Ende die Funktionseinheit angeordnet ist und an dessen anderem Ende das Kraftunterstützungsmodul angeordnet ist. Dadurch kann das Verstellmodul besonders vorteilhaft zur schwenkbaren Lagerung der Funktionseinheit ausgebildet werden.

Es wird weiterhin vorgeschlagen, dass die Funktionseinheit als ein Bildschirm ausgebildet ist. Dadurch kann die Funktionseinheit besonders vorteilhaft ausgebildet werden.

Eine nicht beanspruchte Ausführungsform besteht darin, das Kurvenelement als ein linear verschiebbar gelagertes Linearführungselement auszubilden. Unter einem "Linearführungselement" soll ein Element verstanden werden, das linear verschiebbar gelagert ist. Vorzugsweise ist das Linearführungselement dabei entlang einer Geraden linear verschiebbar geführt. Grundsätzlich wäre es aber auch denkbar, dass das Linearführungselement entlang einer gekrümmten Führungsbahn linear verschiebbar gelagert ist. Dadurch kann das Kurvenelement vorteilhaft robust ausgebildet werden.

Weiterhin wird vorgeschlagen, dass die Funktionseinheit als ein Flugzeugsitzelement ausgebildet ist, das zumindest einen Teil einer Sitzabstützfläche ausbildet. Unter einem "Flugzeugsitzelement" soll vorzugsweise ein wesentlicher Bestandteil eines Flugzeugsitzes verstanden werden, der vorzugsweise einen Teil einer Sitzfläche oder Abstützfläche des Flugzeugsitzes ausbildet. Vorzugsweise ist die als Flugzeugsitzelement ausgebildete Funktionseinheit als eine Rückenlehne ausgebildet. Grundsätzlich ist es auch denkbar, dass die als Flugzeugsitzelement ausgebildete Funktionseinheit als ein Sitzboden oder eine Rückenlehne ausgebildet ist. Dadurch kann die Funktionseinheit besonders vorteilhaft ausgebildet werden.

### Zeichnungen

Weitere Vorteile ergeben sich aus der folgenden Zeichnungsbeschreibung. In den Zeichnungen sind vier Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Solche Kombinationen liegen im Rahmen der Erfindung, vorausgesetzt dass sie unter den Wortlaut der angefügten Ansprüche fallen.

Es zeigen:
- Fig. 1: eine schematische Seitenansicht eines Teils eines Flugzeugsitzes mit einer erfindungsgemäßen Flugzeugsitzvorrichtung mit einer Funktionseinheit und eines Verstellmoduls,
- Fig. 2: eine schematische Seitenansicht der Funktionseinheit, des Verstellmoduls und eines Kraftunterstützungsmoduls,
- Fig. 3: eine weitere schematische Darstellung der Funktionseinheit, des Verstellmoduls und des Kraftunterstützungsmoduls,
- Fig. 4: eine schematische Ansicht eines Aufbaus eines als Nockenscheibe ausgebildeten Kurvenelements mit einer angreifenden Betätigungskraft und einer resultierenden Unterstützungskraft,
- Fig. 5: eine entrollte Darstellung eines Kurvenelements mit seiner Nockenbahn,
- Fig. 6: eine weitere schematische Darstellung eines Aufbaus der Nockenscheibe mit der angreifenden Betätigungskraft und der resultierenden Unterstützungskraft,
- Fig. 7: eine schematische Darstellung eines Kraftunterstützungsmoduls in einer Flugzeugsitzvorrichtung in einem zweiten Ausführungsbeispiel,
- Fig. 8: eine schematische Seitenansicht eines Teils eines Flugzeugsitzes mit einer erfindungsgemäßen Flugzeugsitzvorrichtung mit einer als Rückenlehne ausgebildeten Funktionseinheit in einem dritten Ausführungsbeispiel,
- Fig. 9: eine schematische Darstellung eines Verstellmoduls und eines Kraftunterstützungsmoduls des dritten Ausführungsbeispiels und
- Fig. 10: eine schematische Darstellung eines unbeanspruchten Kraftunterstützungsmoduls.

### Beschreibung der Ausführungsbeispiele

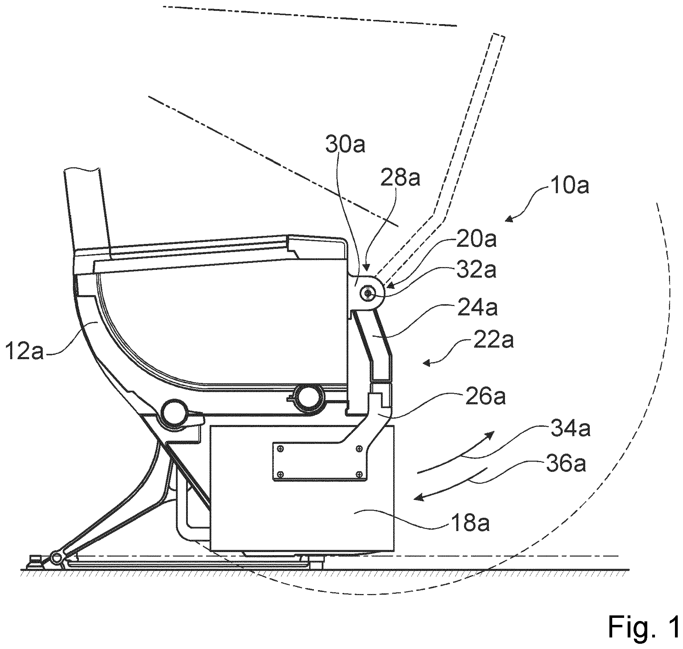

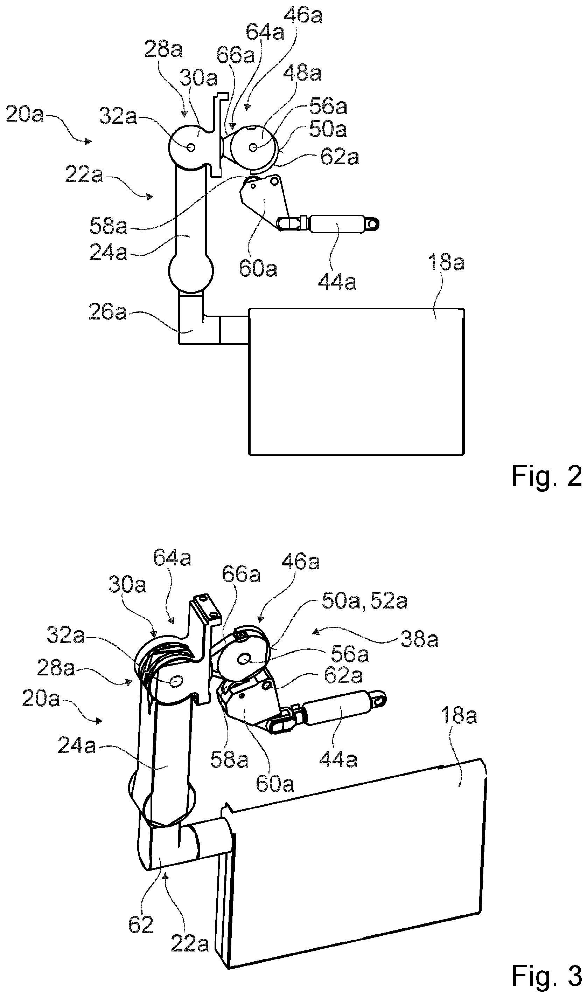

Die Figuren 1 bis 6 zeigen ein erstes Ausführungsbeispiel einer erfindungsgemäßen Flugzeugsitzvorrichtung. Die Flugzeugsitzvorrichtung ist als ein Teil eines teilweise dargestellten Flugzeugsitzmoduls 10a ausgebildet. Das Flugzeugsitzmodul 10a umfasst einen Flugzeugsitz 12a. Der Flugzeugsitz 12a weist eine Aufständereinheit 14a auf, über die der Flugzeugsitz 12a auf einem Kabinenboden eines Flugzeugs anbindbar ist. Der Flugzeugsitz 12a ist vorzugsweise Teil einer Sitzreihe mit mehreren nebeneinander angeordneten Flugzeugsitzen. Die Sitzreihe ist als eine vorderste Sitzreihe ausgebildet. Vor der als vorderste Sitzreihe ausgebildeten Sitzreihe ist keine weitere Sitzreihe direkt angeordnet. Der Flugzeugsitz 12a umfasst eine Konsole 16a. Die Konsole 16a ist seitlich neben dem Flugzeugsitz 12a angeordnet. Die Konsole16a bildet eine Armlehne aus. Die Konsole 16a bildet einen Verstaubereich aus. Der Verstaubereich ist unterhalb der Armlehne angeordnet. Die Flugzeugsitzvorrichtung umfasst eine Funktionseinheit 18a. Die Funktionseinheit 18a ist als ein Bildschirm ausgebildet. Die Funktionseinheit 18a ist dazu vorgesehen, zwischen einer ersten Stellung und zumindest einer zweiten Stellung verstellt zu werden. Die erste Stellung ist als eine Verstaustellung der Funktionseinheit 18a ausgebildet. In der ersten Stellung, also der Verstaustellung, ist die Funktionseinheit 18a in dem Verstaubereich der Konsole 16a angeordnet. In der ersten Stellung ist die Funktionseinheit 18a nicht betriebsbereit. In der ersten Stellung ist die Funktionseinheit 18a neben dem Flugzeugsitz 12a, insbesondere in einem Bereich neben der Aufständereinheit 14a des Flugzeugsitzes 12a angeordnet. Die zweite Stellung ist als eine Gebrauchsstellung der Funktionseinheit 18a ausgebildet. In der zweiten Stellung, also in der Gebrauchsstellung, ist die Funktionseinheit 18a durch einen auf dem Flugzeugsitz 12a sitzenden Passagier benutzbar. In der zweiten Stellung ist die Funktionseinheit 18a vor dem Flugzeugsitz 12a angeordnet. In der zweiten Stellung, also in der Gebrauchsstellung, ist die als Bildschirm ausgebildete Funktionseinheit 18a in einer Gebrauchshöhe vor dem Flugzeugsitz 12a angeordnet und dem Flugzeugsitz 12a zugewandt. In der Gebrauchsstellung ist die als Bildschirm ausgebildete Funktionseinheit 18a einem Sitzbereich bzw. einer Rückenlehne des Flugzeugsitzes 12a zugewandt. Die als Bildschirm ausgebildete Funktionseinheit 18a ist in der Gebrauchsstellung in einem Blickbereich eines auf dem Flugzeugsitz 12a sitzenden Passagiers angeordnet. In Figur 1 ist die Gebrauchsstellung der Funktionseinheit 18a gestrichelt dargestellt.

Die Funktionseinheit 18a ist zwischen der ersten Stellung und der zweiten Stellung verschwenkbar. Die Funktionseinheit 18a ist zwischen der Gebrauchsstellung und der Verstaustellung verschwenkbar. Die Funktionseinheit 18a ist zwischen der ersten Stellung und der zweiten Stellung verschwenkbar an der Flugzeugsitzvorrichtung angebunden. Die Flugzeugsitzvorrichtung weist ein Verstellmodul 20a auf. Das Verstellmodul 20a ist dazu vorgesehen, die Funktionseinheit 18a verstellbar an dem Flugzeugsitzmodul 10a anzubinden. Das Verstellmodul 20a ist dazu vorgesehen, die Funktionseinheit 18a in einer Verstellbewegung zwischen der ersten Stellung und der zweiten Stellung zu verstellen. Die Verstellbewegung, mittels der die Funktionseinheit 18a zwischen ihren zwei Stellungen verstellbar ist, ist als eine Verschwenkbewegung ausgebildet. Während der Verstellbewegung wird die Funktionseinheit 18a in einer Kreisbahn bewegt.

Das Verstellmodul 20a umfasst einen drehbar gelagerten Haltearm 22a, an dessen einem Ende die Funktionseinheit 18a angeordnet ist. Mit einem ersten Ende ist der drehbar gelagerte Haltearm 22a an dem Flugzeugsitz 12a, insbesondere an der Konsole 16a angebunden. Mit seinem ersten Ende ist der Haltearm 22a drehbar an dem Flugzeugsitz 12a, insbesondere an der Konsole 16a angebunden. Grundsätzlich wäre es auch denkbar, dass der Haltearm 22a an einer anderen Stelle an dem Flugzeugsitz 12a angebunden ist. An dem zweiten Ende des Haltearms 22a ist die Funktionseinheit 18a angebunden. Der drehbar gelagerte Haltearm 22a ist mehrteilig ausgebildet. Der drehbar gelagerte Haltearm 22a weist ein erstes Teilelement 24a auf. Das erste Teilelement 24a des Haltearms 22a ist als ein Hauptschwenkelement ausgebildet. Das erste Teilelement 24a des Haltearms 22a ist schwenkbar an der Konsole 16a angebunden. Die erste Teilelement 24a ist mit einem ersten Ende an dem Flugzeugsitz 12a schwenkbar angebunden. Das erste Ende des ersten Teilelements 24a bildet das erste Ende des Haltearms 22a aus. Der Haltearm 22a weist ein zweites Teilelement 26a auf. Das zweite Teilelement 26a ist an einem zweiten Ende des ersten Teilelements 24a angebunden. Das zweite Teilelement 26a ist schwenkbar mit dem ersten Teilelement 24a verbunden. Das zweite Teilelement 26a ist über ein Drehgelenk verschwenkbar mit dem zweiten Ende des ersten Teilelements 24a verbunden. Das zweite Teilelement 26a ist als ein L-förmiges Element ausgebildet. An einem zweiten Ende des zweiten Teilelements 26a ist die Funktionseinheit 18a angebunden. Das zweite Ende des zweiten Teilelements 26a bildet das zweite Ende des Haltearms 22a aus. Grundsätzlich wäre es auch denkbar, dass der Haltearm 22a eine andere Anzahl von Teilelementen aufweist, oder lediglich von einem einzigen Armelement gebildet ist.

Das Verstellmodul 20a weist ein Drehlager 28a auf. Über das Drehlager 28a ist der Haltearm 22a an dem Flugzeugsitz 12a angebunden. Das Drehlager 28a ist an einem ersten Ende des Haltearms 22a angebunden. Das Drehlager 28a ist mit dem ersten Ende des ersten Teilelements 24a des Haltearms 22a verbunden. Das Drehlager 28a weist ein erstes Lagerelement 30a auf, das mit dem Flugzeugsitz 12a verbunden ist. Das erste Lagerelement 30a des Drehlagers 28a ist fest an dem Flugzeugsitz 12a, insbesondere an der Konsole 16a montiert. Das erste Lagerelement 30a umfasst zwei zueinander beabstandete Wandungen, die jeweils eine Lageraufnahme aufweisen, die koaxial zueinander ausgerichtet sind. Die Lageraufnahmen des ersten Lagerelements 30a bilden eine Drehachse des Drehlagers 28a aus. Die Lageraufnahmen des ersten Lagerelements 30a sind dazu vorgesehen, dass ein korrespondierend ausgebildetes Lagerelement darin drehbar gelagert werden kann. Das Drehlager 28a weist ein zweites Lagerelement 32a auf, das fest mit dem Haltearm 22a verbunden ist. Das zweite Lagerelement 32a ist als ein Lagerbolzen ausgebildet. Das zweite Lagerelement 32a ist in einem montierten Zustand in den Lageraufnahmen des ersten Lagerelements 30a drehbar gelagert. Das zweite Lagerelement 32a des Drehlagers 28a ist fest mit an dem ersten Ende des Haltearms 22a angebracht. Das als Lagerbolzen ausgebildete zweite Lagerelement 32a ist fest in einer Aufnahme des ersten Teilelements 24a des Haltearms 22a angebunden. Die beiden Lagerelemente 30a, 32a sind um die Drehachse des Drehlagers 28a drehbar zueinander. Über die beiden Lagerelemente 30a, 32a des Drehlagers 28a ist der Haltearm 22a drehbar an dem Flugzeugsitz 12a, insbesondere dem Flugzeugsitzmodul 10a angebunden.

Über das Verstellmodul 20a ist der Haltearm 22a und damit die Funktionseinheit 18a aus der ersten, als Verstaustellung ausgebildeten Stellung in einer Verstellbewegung in einer positiven Verstellrichtung in die zweite Stellung verschwenkbar. Über das Verstellmodul 20a ist der Haltearm 22a und damit die Funktionseinheit 18a aus der zweiten, als Gebrauchsstellung ausgebildeten Stellung in einer Verstellbewegung in einer negativen Verstellrichtung in die erste Stellung verschwenkbar. Zur Verschwenkung der Funktionseinheit 18a mittels des Verstellmoduls 20a muss eine Verstellkraft auf die Funktionseinheit 18a und/oder das Verstellmodul 20a ausgeübt werden. Die Verstellkraft kann dabei von einem Passagier ausgeübt werden, der die Verstellkraft durch Druck oder Zug auf die Funktionseinheit 18a und/oder das Verstellmodul 20a aufbringt. Durch eine positiv wirkende Verstellkraft kann die Funktionseinheit 18a und das Verstellmodul 20a, insbesondere aus der ersten Stellung, in Richtung der zweiten Stellung bewegt werden. Durch eine negativ wirkende Verstellkraft kann die Funktionseinheit 18a und das Verstellmodul 20a, insbesondere aus der zweiten Stellung, in Richtung der ersten, als Verstaustellung ausgebildeten Stellung bewegt werden.

Die Flugzeugsitzvorrichtung umfasst ein Kraftunterstützungsmodul 38a. Das Kraftunterstützungsmodul 38a ist dazu vorgesehen, eine Unterstützungskraft auf das Verstellmodul 20a auszuüben. Das Kraftunterstützungsmodul 38a ist an dem ersten Ende des Verstellmoduls 20a angeordnet. Das Kraftunterstützungsmodul 38a ist an das erste Ende des Verstellmoduls 20a, insbesondere an das erste Ende des Haltearms 22a angebunden. Das Kraftunterstützungsmodul 38a ist in einem betätigten Zustand dazu vorgesehen, eine Unterstützungskraft 40a auf das Verstellmodul 20a auszuüben, um eine Verstellbewegung der Funktionseinheit 18a zwischen der ersten Stellung und der zweiten Stellung zu unterstützen. Das Kraftunterstützungsmodul 38a ist dazu vorgesehen, sowohl bei einer Verstellbewegung der Funktionseinheit 18a von der ersten Stellung in die zweite Stellung als auch bei einer Verstellbewegung der Funktionseinheit 18a von der zweiten Stellung in die erste Stellung die Unterstützungskraft 40a bereitzustellen. Die Unterstützungskraft 40a, die auf das Verstellmodul ausgeübt wird, ist variabel. Die Unterstützungskraft 40a, die auf das Verstellmodul 20a ausgeübt wird, ist insbesondere variabel in Abhängigkeit von einer aktuellen Position der Funktionseinheit 18a. Die Unterstützungskraft 40a, die von dem Kraftunterstützungsmodul 38a auf das Verstellmodul 20a ausgeübt wird, kann in eine positive Verstellrichtung 34a, als auch in eine negative Verstellrichtung 36a wirken. Die von dem Kraftunterstützungsmodul 38a bereitgestellte Unterstützungskraft 40a ist in Abhängigkeit der Verstellbewegung, der Funktionseinheit 18a, insbesondere in unterschiedlichen Positionen der Funktionseinheit 18a während der Verstellbewegung unterschiedlich groß. Dadurch kann eine Verstellbewegung der Funktionseinheit 18a in unterschiedlichen Stellungen der Funktionseinheit 18a mittels des Kraftunterstützungsmoduls 38a unterschiedlich stark mit der Unterstützungskraft 40a unterstützt werden.

Das Kraftunterstützungsmodul 38a ist dazu vorgesehen, eine Betätigungskraft 42a in die variable Unterstützungskraft 40a umzuwandeln. Das Kraftunterstützungsmodul 38a weist einen Kraftspeicher 44a auf. Der Kraftspeicher 44a ist dazu vorgesehen, die Betätigungskraft 42a bereitzustellen. Der Kraftspeicher 44a ist als eine Gasdruckfeder ausgebildet. Grundsätzlich wäre es auch denkbar, dass der Kraftspeicher 44a als ein anderes Federelement ausgebildet ist. Der Kraftspeicher 44a kann eine linear wirkende Betätigungskraft bereitstellen. Der Kraftspeicher 44a stellt dabei eine über seinen Federweg im Wesentlichen gleichbleibende Betätigungskraft bereit. Grundsätzlich ist es aber auch denkbar, dass der Kraftspeicher 44a einen nicht linearen Kraftverlauf aufweist, eine Betätigungskraft also über den Betätigungsweg unterschiedlich groß ist.

Das Kraftunterstützungsmodul 38a weist ein Betätigungsgetriebe 46a auf. Das Betätigungsgetriebe 46a ist dazu vorgesehen, die von dem Kraftspeicher 44a bereitgestellte Betätigungskraft 42a in die variable Unterstützungskraft 40a umzuwandeln. Das Betätigungsgetriebe 46a ist als ein Nockengetriebe ausgebildet. Das Betätigungsgetriebe 46a ist als ein Kurvengetriebe ausgebildet. Das Betätigungsgetriebe 46a weist ein beweglich gelagertes Kurvenelement 48a auf. Das beweglich gelagerte Kurvenelement 48a ist dazu vorgesehen, die Betätigungskraft 42a des Kraftspeichers 44a in die Unterstützungskraft 40a umzuwandeln. Das Kurvenelement 48a ist dazu vorgesehen, die Unterstützungskraft 40a in einer Abhängigkeit einer Verstellposition zu variieren. Das beweglich gelagerte Kurvenelement 48a weist eine Nockenbahn 50a auf. Die Nockenbahn 50a ist von einer Kurvenbahn 52a ausgebildet, auf die die Betätigungskraft 42a wirkt. Die Kurvenbahn 52a weist unterschiedliche Steigungen auf, sodass die Betätigungskraft in Abhängigkeit der Steigung unterschiedlich in die Unterstützungskraft 40a umgesetzt wird. Die Unterstützungskraft 40a ist in Abhängigkeit eines Winkels der Nockenbahn 50a positiv oder negativ ausgebildet.

Das Kurvenelement 48a ist als eine drehbar gelagerte Nockenscheibe ausgebildet. Das als Nockenscheibe ausgebildete Kurvenelement 48a weist einen Grundkreis 54a auf. Das drehbar gelagerte Kurvenelement 48a weist eine Lageraufnahme 56a auf. Über die Lageraufnahme 56a ist das Kurvenelement 48a drehbar gelagert. Über die Lageraufnahme 56a ist das Kurvenelement 48a drehbar an dem Flugzeugsitz 12a, insbesondere an der Konsole 16a gelagert. Die Lageraufnahme 56a ist in einem Mittelpunkt des Grundkreises 54a des Kurvenelements 48a angeordnet. Die Lageraufnahme 56a bildet einen Rotationsmittelpunkt des als Nockenscheibe ausgebildeten Kurvenelements 48a aus. Die Nockenbahn 50a ist von dem als drehbar gelagerte Nockenscheibe ausgebildeten Kurvenelement 48a ausgebildet. Die Nockenbahn 50a ist von einer in Umfangsrichtung verlaufenden Kurvenbahn 52a ausgebildet. Die Nockenbahn 50a weist variierende Abstände zu dem Grundkreis 54a auf. In Umfangsrichtung betrachtet weist die Kurvenbahn 52a unterschiedliche Abstände zu dem Grundkreis 54a auf. Die Kurvenbahn 52a weist an unterschiedlichen Positionen unterschiedliche Winkel zu dem Grundkreis 54a auf.

Das Betätigungsgetriebe 46a weist ein Betätigungselement 58a auf. Das Betätigungselement 58a ist dazu vorgesehen, die Betätigungskraft 42a auf die Nockenbahn 50a des Kurvenelements 48a zu übertragen. Das Betätigungselement 58a liegt in einem montierten Zustand auf der Nockenbahn 50a des Kurvenelements 48a auf. Das Betätigungselement 58a ist als ein drehbar gelagertes Betätigungsrad ausgebildet. Bei einer Rotation des als Nockenscheibe ausgebildeten Kurvenelements 48a um seinen Rotationsmittelpunkt läuft das als Betätigungsrad ausgebildete Betätigungselement 58a auf der Nockenbahn 50a des Kurvenelements 48a ab. Dadurch können vorteilhaft Reibungsverluste vermieden werden. Das als Nockenscheibe ausgebildete Kurvenelement 48a kann vorteilhaft einfach relativ zu dem Betätigungselement 58a verdrehen.

Das Kraftunterstützungsmodul 38a weist ein schwenkbar gelagertes Hebelelement 60a auf. Das schwenkbar gelagerte Hebelelement 60a ist dazu vorgesehen, die Betätigungskraft 42a von dem Kraftspeicher 44a auf das Betätigungselement 58a zu übertragen. Das schwenkbar gelagerte Hebelelement 60a weist eine Lageraufnahme 62a auf, über die das Hebelelement 60a schwenkbar gelagert ist. Über die Lageraufnahme 62a und ein geeignetes Lagerelement, wie insbesondere einen Lagerbolzen, ist das Hebelelement 60a schwenkbar relativ zu dem Kraftspeicher 44a und dem Kurvenelement 48a gelagert. Das Hebelelement 60a ist über die Lageraufnahme 62a und das Lagerelement schwenkbar zu dem Flugzeugsitz 12a, insbesondere zu der Konsole 16a gelagert. Das Hebelelement 60a weist eine dreiecksähnliche Form auf. An einem ersten Ende des Hebelelements 60a ist der Kraftspeicher 44a mit dem Hebelelement 60a verbunden. Der Kraftspeicher 44a ist über ein Schwenklager an dem ersten Ende des Hebelelements 60a angebunden. An einem zweiten Ende des Hebelelements 60a ist das Betätigungselement 58a mit dem Hebelelement 60a verbunden. Das Betätigungselement 58a ist drehbar mit dem Hebelelement 60a verbunden. Die Lageraufnahme 62a, über die das Hebelelement 60a schwenkbar gelagert ist, ist zwischen der Anbindung des Betätigungselements 58a und der Anbindung des Kraftspeichers 44a angeordnet. Die Lageraufnahme 62a ist vorzugsweise außermittig an dem Hebelelement 60a angebracht. Die Lageraufnahme 62a ist vorzugsweise außerhalb einer direkten Verbindungslinie der Anbindungen für den Kraftspeicher 44a und das Betätigungselement 58a angeordnet.

Die Flugzeugsitzvorrichtung umfasst eine Kopplungseinheit 64a. Die Kopplungseinheit 64a ist dazu vorgesehen, das Kraftunterstützungsmodul 38a und das Verstellmodul 20a funktional miteinander zu koppeln. Die Kopplungseinheit 64a ist dazu vorgesehen, die von dem Kraftunterstützungsmodul 38a bereitgestellte Unterstützungskraft 40a an das Verstellmodul 20a zu übertragen. Die Kopplungseinheit 64a ist dazu vorgesehen, die Unterstützungskraft 40a von dem Kurvenelement 48a auf den Haltearm 22a des Verstellmoduls 20a zu übertragen. Die Kopplungseinheit 64a verbindet das Kurvenelement 48a und den Haltearm 22a des Verstellmoduls 20a bewegungstechnisch miteinander. Die Kopplungseinheit 64a verbindet das Kurvenelement 48a und den Haltearm 22a des Verstellmoduls 20a drehfest miteinander. Die Kopplungseinheit 64a ist von einem Umschlingungselement 66a gebildet. Das Umschlingungselement 66a ist als ein Riemen ausgebildet. Das als Riemen ausgebildeten Umschlingungselement 66a umgreift das als Nockenscheibe ausgebildete Kurvenelement 48a in einem Kopplungsbereich. Das als Riemen ausgebildete Umschlingungselement 66a umgreift ebenfalls ein Lagerbereich des drehbar gelagerten Haltearms 22. Über das Umschlingungselement 66a kann der drehbar gelagerte Haltearm 22 verdreht werden. Das Umschlingungselement 66a greift vorzugsweise direkt an dem Drehlager 28a des ersten Teilelements 24a des Haltearms 22a an.

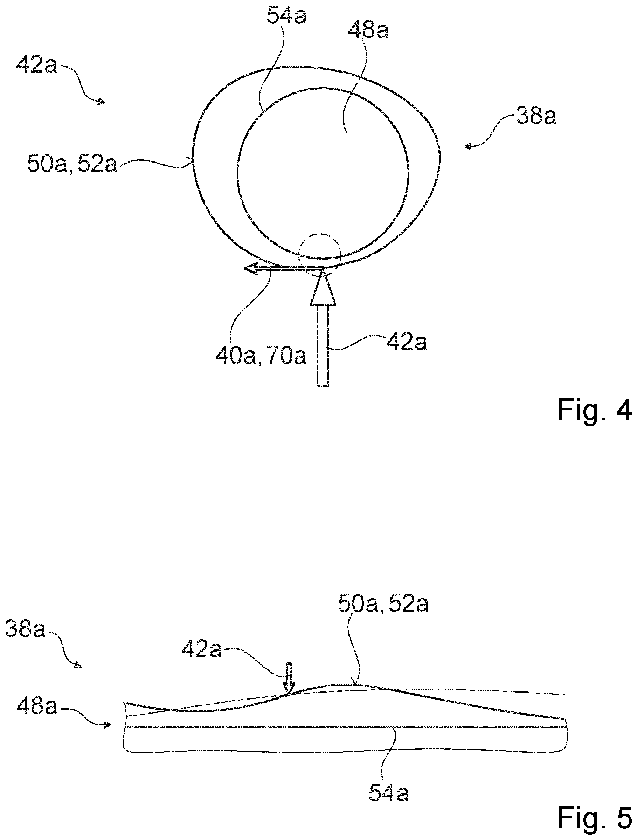

Die von dem Kraftspeicher 44a auf die Nockenbahn 50a des Kurvenelements 48a ausgeübte Betätigungskraft, ist auf den Rotationsmittelpunkt des als Nockenscheibe ausgebildeten Kurvenelements 48a ausgerichtet. Die von dem Kraftspeicher 44a auf die Nockenbahn 50a des Kurvenelements 48a übertragene Betätigungskraft 42a ist unabhängig von einer Winkelstellung des Kurvenelements 48a auf den Rotationsmittelpunkt des als Nockenscheibe ausgebildeten Kurvenelements 48a ausgebildet. Die Nockenbahn 50a, die in Umfangsrichtung des Kurvenelements 48a gesehen jeweils unterschiedliche Höhen zu dem Grundkreis 54a aufweist, verläuft dadurch nicht parallel zu dem Grundkreis 54a. Zwischen der Nockenbahn 50a und dem Grundkreis 54a des Kurvenelements 48a ist ein Winkelversatz gegeben. Der Winkelversatz zwischen der Nockenbahn 50a, die als eine Kurvenbahn 52a ausgebildet ist, ist in den Figuren 4 bis 6 zu erkennen. In Figur 5 ist ein Nockenhub der Nockenbahn 50a als Funktion des Drehwinkels des Kurvenelements 48a gezeigt. Die Nockenbahn 50a weist in unterschiedlichen Drehwinkeln des Kurvenelements 48a unterschiedliche Neigungen zu dem Grundkreis 54a auf. Die Nockenbahn 50a weist in Umfangsrichtung betrachtet unterschiedlich große Neigungen auf.

Durch die Neigung der Nockenbahn 50a resultiert aus der in Richtung des Rotationsmittelpunkts des Kurvenelements 48a auf die Nockenbahn 50a wirkenden Betätigungskraft 44a des Kraftspeichers eine in Umfangsrichtung wirkende Kraftkomponente 70a. Die in Umfangsrichtung wirkende Kraftkomponente 70a ist als ein Drehmoment gebildet, das auf das Kurvenelement 48a wirkt. Die Kraftkomponente 70a bildet die Unterstützungskraft 40a aus. Die aus der Betätigungskraft 44a resultierende Kraftkomponente 70a, die die Unterstützungskraft 40a ausbildet, ist abhängig von einer Neigung der Nockenbahn 50a. Bei einer Drehung des Kurvenelements 48a während einer Verstellbewegung wird durch die unterschiedliche Neigung der Nockenbahn 50a die Unterstützungskraft variiert. Durch die in den unterschiedlichen Drehwinkeln des Kurvenelements 48a unterschiedlichen Neigungen der Nockenbahn 50a resultiert aus der angreifenden Betätigungskraft 42a je nach Drehwinkel eine unterschiedliche Unterstützungskraft 44a. Die resultierende Kraftkomponente 70a und dadurch die Unterstützungskraft 44a kann sowohl in eine erste Drehrichtung des Kurvenelements 48a wirken als auch in eine, der ersten Drehrichtung entgegengesetzte, zweite Drehrichtung. Dadurch kann die Unterstützungskraft 44a in Abhängigkeit des Winkels der Nockenbahn 50a positiv oder negativ ausgebildet sein. Eine Verstellbewegung der Funktionseinheit 18a kann in unterschiedlichen Phasen der Verstellung, also in unterschiedlichen Verstellpositionen der Funktionseinheit 18a unterschiedlich stark durch die Unterstützungskraft 44a unterstützt werden. Die Verstellbewegung der Funktionseinheit 18a kann in unterschiedlichen Verstellpositionen der Funktionseinheit 18a durch die Unterstützungskraft 44a beschleunigt, oder abgebremst werden.

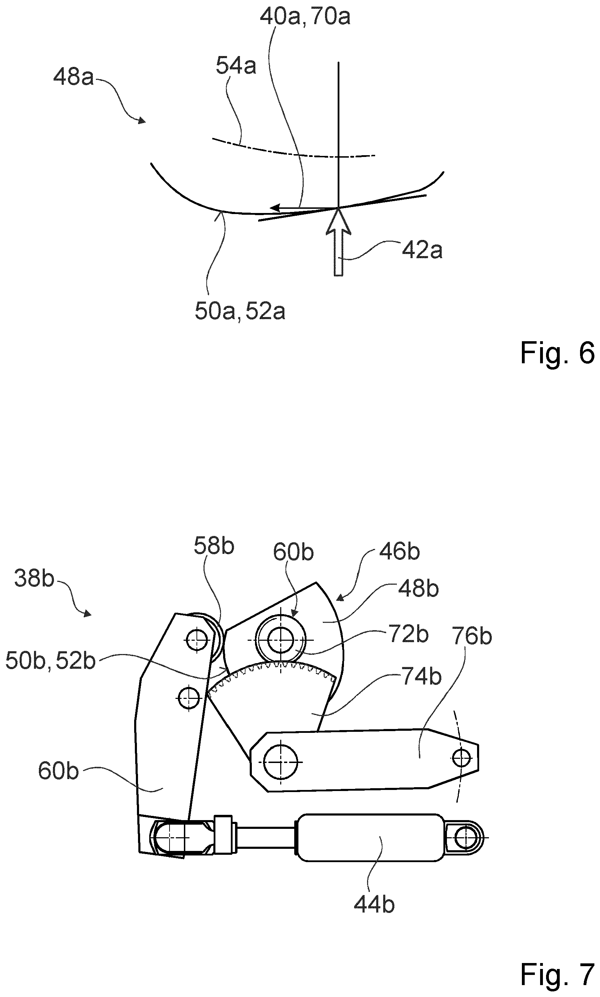

In den Figuren 7 bis 10 sind drei weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Fig. 1 bis 6 verwiesen werden kann. Zur Unterscheidung der Ausführungsbeispiele ist der Buchstabe a den Bezugszeichen des Ausführungsbeispiels in Fig. 1 bis 6 nachgestellt. In den Ausführungsbeispielen der Fig. 7 bis 10 ist der Buchstabe a durch die Buchstaben b bis d ersetzt.

Die Figur 7 zeigt einen Teil einer erfindungsgemäßen Flugzeugsitzvorrichtung in einem zweiten Ausführungsbeispiel. Die Flugzeugsitzvorrichtung ist als ein Teil eines nicht näher dargestellten Flugzeugsitzmoduls ausgebildet. Die Flugzeugsitzvorrichtung umfasst eine nicht näher dargestellte Funktionseinheit. Die Funktionseinheit ist als ein Bildschirm ausgebildet. Die Funktionseinheit ist dazu vorgesehen, zwischen einer ersten Stellung und zumindest einer zweiten Stellung verstellt zu werden. Die Funktionseinheit ist zwischen der ersten Stellung und der zweiten Stellung verschwenkbar.

Die Flugzeugsitzvorrichtung weist ein Verstellmodul 20b auf. Das Verstellmodul 20b ist dazu vorgesehen, die Funktionseinheit verstellbar an dem Flugzeugsitzmodul anzubinden. Das Verstellmodul 20b umfasst einen drehbar gelagerten Haltearm, an dessen einem Ende die Funktionseinheit angeordnet ist. Die Funktionseinheit, und das Verstellmodul können im Wesentlichen gleich ausgebildet sein wie in dem ersten Ausführungsbeispiel.

Die Flugzeugsitzvorrichtung umfasst ein Kraftunterstützungsmodul 38b. Das Kraftunterstützungsmodul 38b ist dazu vorgesehen, eine Unterstützungskraft auf das Verstellmodul 20b auszuüben. Auch das Kraftunterstützungsmodul 38b ist im Wesentlichen gleich ausgebildet wie im ersten Ausführungsbeispiel. Das Kraftunterstützungsmodul 38b weist einen Kraftspeicher 44b auf. Der Kraftspeicher 44b ist dazu vorgesehen, eine Betätigungskraft 42b bereitzustellen. Der Kraftspeicher 44b ist als eine Gasdruckfeder ausgebildet.

Das Kraftunterstützungsmodul 38b weist ein Betätigungsgetriebe 46b auf. Das Betätigungsgetriebe 46b ist dazu vorgesehen, die von dem Kraftspeicher 44b bereitgestellte Betätigungskraft 42b in die variable Unterstützungskraft 40b umzuwandeln. Das Betätigungsgetriebe 46b ist als ein Nockengetriebe ausgebildet. Das Betätigungsgetriebe 46b weist ein beweglich gelagertes Kurvenelement 48b auf. Das beweglich gelagerte Kurvenelement 48b ist dazu vorgesehen, die Betätigungskraft 42b des Kraftspeichers 44b in eine Unterstützungskraft 40b umzuwandeln. Ein Kurvenelement 48b ist dazu vorgesehen, die Unterstützungskraft 40b in einer Abhängigkeit einer Verstellposition zu variieren. Das Kurvenelement 48b ist als eine drehbar gelagerte Nockenscheibe ausgebildet. Das Betätigungsgetriebe 46b weist ein Betätigungselement 58b auf. Das Betätigungselement 58b ist dazu vorgesehen, die Betätigungskraft 42b auf die Nockenbahn 50b des Kurvenelements 48b zu übertragen. Das Kraftunterstützungsmodul 38b weist ein schwenkbar gelagertes Hebelelement 60b auf. Das schwenkbar gelagerte Hebelelement 60b ist dazu vorgesehen, die Betätigungskraft 42b von dem Kraftspeicher 44b auf das Betätigungselement 58b zu übertragen.

Die Flugzeugsitzvorrichtung umfasst eine Kopplungseinheit 64b. Die Kopplungseinheit 64b ist dazu vorgesehen, das Kraftunterstützungsmodul 38b und das Verstellmodul 20b funktional miteinander zu koppeln. Die Kopplungseinheit 64b ist dazu vorgesehen, die von dem Kraftunterstützungsmodul 38b bereitgestellte Unterstützungskraft 40b an das Verstellmodul 20b zu übertragen. Im Unterschied zu dem ersten Ausführungsbeispiel ist die Kopplungseinheit 64b als eine Zahnradübersetzung ausgebildet. Die Kopplungseinheit 64b weist ein erstes Zahnradelement 72b auf. Das erste Zahnradelement 72b ist drehfest mit dem Kurvenelement verbunden. Das erste Zahnradelement 72b ist als ein Stirnzahnrad ausgebildet. Die Kopplungseinheit 64b weist ein zweites Zahnradelement 74b auf. Das zweite Zahnradelement 74b ist verschwenkbar gelagert. Das zweite Zahnradelement 74b ist dazu vorgesehen, mit dem Verstellmodul 20b gekoppelt zu werden. Das zweite Zahnradelement 74b ist als ein Teilzahnrad mit einer Stirnverzahnung ausgebildet. Das zweite Zahnradelement 74b kämmt mit seiner Stirnradverzahnung in dem als Stirnzahnrad ausgebildeten ersten Zahnradelement 72b. Das Verstellmodul 20b weist ein Kopplungselement 76b auf, über das die Kopplungseinheit 64b an das Verstellmodul 20b angebunden ist. Das Kopplungselement 76b ist als eine Kopplungsstange ausgebildet. Das als Kopplungsstange ausgebildete Kopplungselement 76b ist an einem ersten Ende mit dem zweiten Zahnradelement 74b verbunden. An einem zweiten Ende ist das als Kopplungsstange ausgebildete Kopplungselement 76b mit dem nicht näher dargestellten Haltearm des Verstellmoduls 20b gekoppelt.

Eine Funktionsweise des Kraftunterstützungsmoduls 38b und des Verstellmoduls 20b zur Verstellung der Funktionseinheit ist im Wesentlichen gleich wie in dem ersten Ausführungsbeispiel und soll deshalb hier nicht näher beschrieben werden. Auf die entsprechende Beschreibung des ersten Ausführungsbeispiels sei hier verwiesen.

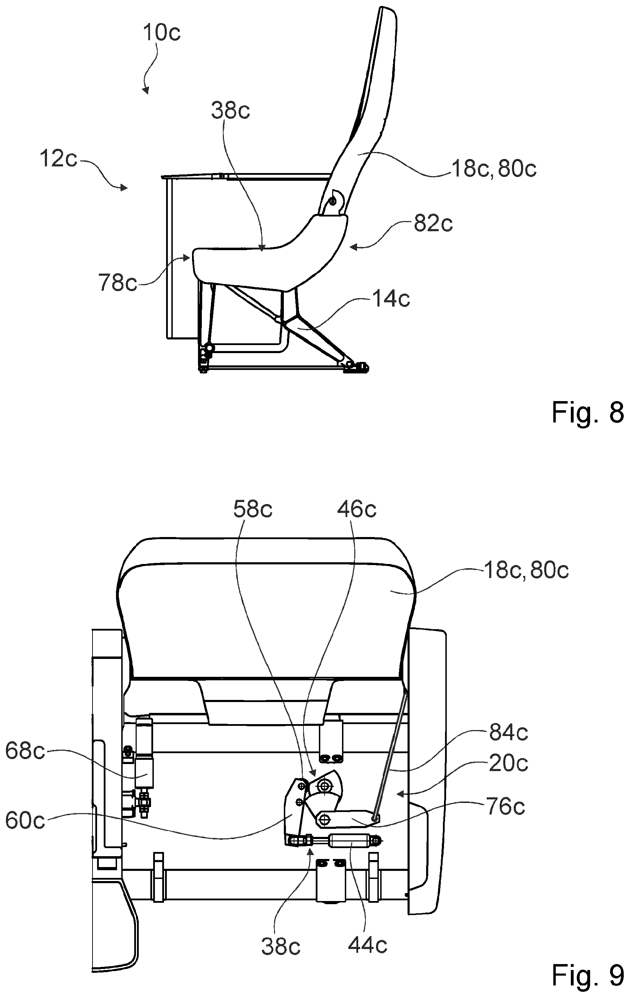

Die Figuren 8 und 9 zeigen ein drittes Ausführungsbeispiel einer erfindungsgemäßen Flugzeugsitzvorrichtung. Die Flugzeugsitzvorrichtung ist als ein Teil eines teilweise dargestellten Flugzeugsitzmoduls 10c ausgebildet. Das Flugzeugsitzmodul 10c umfasst einen Flugzeugsitz 12c. Der Flugzeugsitz 12c weist eine Aufständereinheit 14c auf, über die der Flugzeugsitz 12c auf einem Kabinenboden eines Flugzeugs anbindbar ist. Der Flugzeugsitz 12c weist ein als Sitzboden ausgebildetes Flugzeugsitzelement 78c auf. Das als Sitzboden ausgebildete Flugzeugsitzelement 78c ist mit der Aufständereinheit 14c gekoppelt. Der Flugzeugsitz 12c weist ein weiteres Flugzeugsitzelement 80c auf. Das weitere Flugzeugsitzelement 80c ist als eine Rückenlehne ausgebildet.

Die Flugzeugsitzvorrichtung umfasst eine Funktionseinheit 18c. Die Funktionseinheit 18c ist im Unterschied zu den vorhergehenden Ausführungsbeispielen anders ausgebildet. Die Funktionseinheit 18c ist als das Flugzeugselement 80c ausgebildet, das als eine Rückenlehne ausgebildet ist. Die Funktionseinheit 18c ist als die Rückenlehne des Flugzeugsitzes 12c ausgebildet. Die als Rückenlehne ausgebildete Funktionseinheit 18c ist verschwenkbar mit der Aufständereinheit 14c gekoppelt. Die als Rückenlehne ausgebildete Funktionseinheit 18c ist dazu vorgesehen, von einem auf dem Flugzeugsitz 12c sitzenden Passagier verschwenkt zu werden. Durch eine Verschwenkung der als Rückenlehne ausgebildeten Funktionseinheit 18c können eine aufrechte Sitzposition (TTL-Position) und zumindest eine Komfortposition des Flugzeugsitzes 12c bereitgestellt werden.

Die Flugzeugsitzvorrichtung weist ein Verstellmodul 20c auf. Das Verstellmodul 20c ist dazu vorgesehen, die Funktionseinheit 18c, also das als Rückenlehne ausgebildete Flugzeugsitzelement 80c, verstellbar an dem Flugzeugsitzmodul 10c, insbesondere an der Aufständereinheit 14c des Flugzeugsitzes 12c anzubinden. Das Verstellmodul 20c weist eine Lagereinheit 82c auf, über die die als Rückenlehne ausgebildete Funktionseinheit 18c drehbar an der Aufständereinheit 14c angebunden ist. Die Lagereinheit 82c umfasst zwei nicht näher dargestellte Lagerelemente, die die als Rückenlehne ausgebildete Funktionseinheit 18c seitlich lagern. Das Verstellmodul 20c kann vorzugsweise einen Kraftspeicher 68c umfassen. Der Kraftspeicher 68c ist als eine Gasdruckfeder ausgebildet. Der Kraftspeicher 68c ist zur Bereitstellung einer Rückstellkraft für die Funktionseinheit 18c, also das als Rückenlehne ausgebildetes Flugzeugsitzelement 80c, vorgesehen. Der Kraftspeicher 68c ist funktional zwischen der Aufständereinheit und der Funktionseinheit 18c angeordnet.

Die Flugzeugsitzvorrichtung umfasst ein Kraftunterstützungsmodul 38c. Das Kraftunterstützungsmodul 38c ist dazu vorgesehen, eine Unterstützungskraft auf das Verstellmodul 20c auszuüben. Auch das Kraftunterstützungsmodul 38c ist im Wesentlichen gleich ausgebildet wie im ersten Ausführungsbeispiel. Das Kraftunterstützungsmodul 38c weist einen Kraftspeicher 44c auf. Der Kraftspeicher 44c ist dazu vorgesehen, die Betätigungskraft 42c bereitzustellen. Der Kraftspeicher 44c ist als eine Gasdruckfeder ausgebildet.

Das Kraftunterstützungsmodul 38c weist ein Betätigungsgetriebe 46c auf. Das Betätigungsgetriebe 46c ist dazu vorgesehen, die von dem Kraftspeicher 44c bereitgestellte Betätigungskraft 42c in die variable Unterstützungskraft 40c umzuwandeln. Das Betätigungsgetriebe 46c ist als ein Nockengetriebe ausgebildet. Das Betätigungsgetriebe 46c weist ein beweglich gelagertes Kurvenelement 48c auf. Das beweglich gelagerte Kurvenelement 48c ist dazu vorgesehen, die Betätigungskraft 42c des Kraftspeichers 44c in eine Unterstützungskraft 40c umzuwandeln. Das Kurvenelement 48c ist dazu vorgesehen, die Unterstützungskraft 40c in einer Abhängigkeit einer Verstellposition zu variieren. Das Kurvenelement 48c ist als eine drehbar gelagerte Nockenscheibe ausgebildet. Das Betätigungsgetriebe 46c weist ein Betätigungselement 58c auf. Das Betätigungselement 58c ist dazu vorgesehen, die Betätigungskraft 42c auf die Nockenbahn 50c des Kurvenelements 48c zu übertragen. Das Kraftunterstützungsmodul 38c weist ein schwenkbar gelagertes Hebelelement 60c auf. Das schwenkbar gelagerte Hebelelement 60c ist dazu vorgesehen, die Betätigungskraft 42c von dem Kraftspeicher 44c auf das Betätigungselement 58c zu übertragen.

Die Flugzeugsitzvorrichtung umfasst eine Kopplungseinheit 64c. Die Kopplungseinheit 64c ist dazu vorgesehen, das Kraftunterstützungsmodul 38c und das Verstellmodul 20c funktional miteinander zu koppeln. Die Kopplungseinheit 64c ist dazu vorgesehen, die von dem Kraftunterstützungsmodul 38c bereitgestellte Unterstützungskraft 40c an das Verstellmodul 20c zu übertragen. Die Kopplungseinheit 64c ist hier beispielhaft gleich ausgebildet wie in dem zweiten Ausführungsbeispiel. Die Kopplungseinheit 64c ist als eine Zahnradübersetzung ausgebildet. Die Kopplungseinheit 64c weist ein erstes Zahnradelement 72c auf. Das erste Zahnradelement 72c ist drehfest mit dem Kurvenelement 48c verbunden. Die Kopplungseinheit 64c weist ein zweites Zahnradelement 74c auf. Das zweite Zahnradelement 74c ist verschwenkbar gelagert. Das zweite Zahnradelement 74c ist dazu vorgesehen, mit dem Verstellmodul 20c gekoppelt zu werden. Das Verstellmodul 20c weist ein Kopplungselement 76c auf, über das die Kopplungseinheit 64c an das Verstellmodul 20c angebunden ist. Das Kopplungselement 76c ist als eine Kopplungsstange ausgebildet. Das als Kopplungsstange ausgebildete Kopplungselement 76c ist an einem ersten Ende mit dem zweiten Zahnradelement 74c verbunden. Das Verstellmodul 20c weist einen Kopplungsarm 84c auf. Der Kopplungsarm 84c ist an einem zweiten Ende des Kopplungselements 76c angebunden. Der Kopplungsarm 84c ist mit der als Rückenlehne ausgebildeten Funktionseinheit 18c verbunden. Über den Kopplungsarm 84c wird die Unterstützungskraft 40c des Kraftunterstützungsmoduls 38c an die als Rückenlehne ausgebildeten Funktionseinheit 18c übertragen. Dadurch kann die Unterstützungskraft 40c des Kraftunterstützungsmoduls 38c eine Verstellbewegung der als Rückenlehne ausgebildeten Funktionseinheit 18c unterstützen. Die von dem Kraftunterstützungsmodul 38c bereitgestellte Unterstützungskraft ist vorzugsweise zu einer Unterstützung des Kraftspeichers 68c zur Verstellung des als Rückenlehne ausgebildeten Flugzeugsitzelements 80c vorgesehen.

Eine Funktionsweise des Kraftunterstützungsmoduls 38c und des Verstellmoduls 20c zur Verstellung der Funktionseinheit 18c ist im Wesentlichen gleich wie in dem ersten Ausführungsbeispiel und soll deshalb hier nicht näher beschrieben werden. Auf die entsprechende Beschreibung des ersten Ausführungsbeispiels sei hier verwiesen.

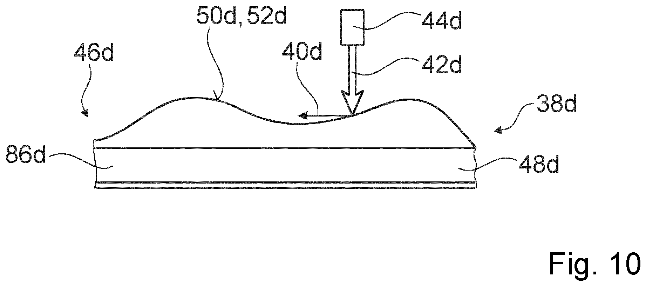

Die Figur 10 zeigt einen Teil einer unbeanspruchten Flugsitzvorrichtung. Die Flugzeugsitzvorrichtung ist als ein Teil eines nicht näher dargestellten Flugzeugsitzmoduls ausgebildet. Die Flugzeugsitzvorrichtung umfasst eine nicht näher dargestellte Funktionseinheit. Die Funktionseinheit ist als ein Bildschirm ausgebildet. Die Funktionseinheit ist dazu vorgesehen, zwischen einer ersten Stellung und zumindest einer zweiten Stellung verstellt zu werden. Die Flugzeugsitzvorrichtung weist ein Verstellmodul 20d auf. Das Verstellmodul 20d ist dazu vorgesehen, die Funktionseinheit verstellbar an dem Flugzeugsitzmodul anzubinden.

Die Flugzeugsitzvorrichtung umfasst ein Kraftunterstützungsmodul 38d. Das Kraftunterstützungsmodul 38d ist dazu vorgesehen, eine Unterstützungskraft auf das Verstellmodul auszuüben. Das Kraftunterstützungsmodul 38d weist im Wesentlichen das gleiche Funktionsprinzip auf, wie in den vorherigen Ausführungsbeispielen. Das Kraftunterstützungsmodul 38d weist im Gegensatz zu den vorherigen Ausführungsbeispielen jedoch Unterschiede auf, die im Folgenden kurz erläutert werden sollen.

Das Kraftunterstützungsmodul 38d ist dazu vorgesehen, eine Betätigungskraft 42d in eine variable Unterstützungskraft 40d umzuwandeln. Das Kraftunterstützungsmodul 38d weist einen Kraftspeicher 44d auf. Der Kraftspeicher 44d ist dazu vorgesehen, die Betätigungskraft 42d bereitzustellen. Das Kraftunterstützungsmodul 38d weist ein Betätigungsgetriebe 46d auf. Das Betätigungsgetriebe 46d ist dazu vorgesehen, die von dem Kraftspeicher 44d bereitgestellte Betätigungskraft 42d in die variable Unterstützungskraft 40d umzuwandeln. Das Betätigungsgetriebe 46d ist als ein Nockengetriebe ausgebildet. Das Betätigungsgetriebe 46d weist ein beweglich gelagertes Kurvenelement 48d auf. Das beweglich gelagerte Kurvenelement 48d ist dazu vorgesehen, die Betätigungskraft 42d des Kraftspeichers 44d in die Unterstützungskraft 40d umzuwandeln. Im Unterschied zu den vorherigen Ausführungsbeispielen ist das beweglich gelagerte Kurvenelement 48d als ein linear verschiebbar gelagertes Linearführungselement ausgebildet. Das als linear verschiebbar gelagertes Linearführungselement ausgebildete Kurvenelement 48d ist entlang einer Verschiebeachse linear verschiebbar. Das Kurvenelement 48d weist eine längliche Grundform auf. Das Kurvenelement 48d ist von einem länglichen Grundkörper 86d gebildet. Der Grundkörper 86d des Kurvenelements 48d bildet eine Führungsschiene aus.

Die Führungsschiene des Kurvenelements 48d bildet die Verschiebeachse aus. Über die Führungsschiene ist das Kurvenelement 48d in einer äquivalent ausgebildeten Führungsschiene linear verschiebbar gelagert. Das Kurvenelement 48d weist eine Nockenbahn 50d auf. Die Nockenbahn 50d ist auf einer Oberseite des Grundkörpers 86d des Kurvenelements 48d angeordnet. Die Nockenbahn 50d ist als eine Kurvenbahn 52d ausgebildet. Die Nockenbahn 50d weist entlang einer Haupterstreckung des Kurvenelements 48d einen kurvigen Verlauf auf. Die Nockenbahn 50d weist dabei in unterschiedlichen Bereichen unterschiedliche Neigungen auf.

Das Betätigungsgetriebe 46d weist ein Betätigungselement 58d auf. Das Betätigungselement 58d ist dazu vorgesehen, die Betätigungskraft 42d auf die Nockenbahn 50d des Kurvenelements 48d zu übertragen. Das Betätigungselement 58d ist dazu vorgesehen, die Betätigungskraft 42d in einem rechten Winkel zu der Haupterstreckungsrichtung des Kurvenelements 48d auf die Nockenbahn 50d auszuüben. Durch die über das Betätigungselement 58d auf die Nockenbahn 50d des Kurvenelements 48d aufgebrachte Betätigungskraft 42d wird in Abhängigkeit der Neigung der Nockenbahn 50d eine resultierende Kraftkomponente 70d entlang der Verschiebeachse des Kurvenelements 48d erzeugt. Die Größe und Richtung der Kraftkomponente 70d ist von der entsprechenden Neigung der Nockenbahn 50d abhängig, an der das Betätigungselement 58d die Kraft in die Nockenbahn 50d einleitet.

### Bezugszeichen

- 10: Flugzeugsitzmodul
- 12: Flugzeugsitz
- 14: Aufständereinheit
- 16: Konsole
- 18: Funktionseinheit
- 20: Verstellmodul
- 22: Haltearm
- 24: Teilelement
- 26: Teilelement
- 28: Drehlager
- 30: Lagerelement
- 32: Lagerelement
- 34: Positive Verstellrichtung
- 36: Negative Verstellrichtung
- 38: Kraftunterstützungsmodul
- 40: Unterstützungskraft
- 42: Betätigungskraft
- 44: Kraftspeicher
- 46: Betätigungsgetriebe
- 48: Kurvenelement
- 50: Nockenbahn
- 52: Kurvenbahn
- 54: Grundkreis
- 56: Lageraufnahme
- 58: Betätigungselement
- 60: Hebelelement
- 62: Lageraufnahme
- 64: Kopplungseinheit
- 66: Umschlingsungselement
- 68: Kraftspeicher
- 70: Kraftkomponente
- 72: Zahnradelement
- 74: Zahnradelement
- 76: Kopplungselement
- 78: Flugzeugsitzelement
- 80: Flugzeugsitzelement
- 82: Lagereinheit
- 84: Kopplungsarm
- 86: Grundkörper

## Patentansprüche

1. Flugzeugsitzvorrichtung mit einer Funktionseinheit (18a; 18b; 18c; 18d), mit einem Verstellmodul (20a; 20b; 20c; 20d), über das die Funktionseinheit (18a; 18b; 18c; 18d) zumindest zwischen einer ersten Stellung und einer zweiten Stellung verstellbar ist, mit einem Kraftunterstützungsmodul (38a; 38b; 38c; 38d), das dazu vorgesehen ist, in einem betätigten Zustand eine Unterstützungskraft (40a) auf das Verstellmodul (20a; 20b; 20c; 20d) auszuüben, um eine Verstellbewegung der Funktionseinheit (18a; 18b; 18c; 18d) zwischen der ersten Stellung und der zweiten Stellung zu unterstützen, wobei das Kraftunterstützungsmodul (38a; 38b; 38c; 38d) dazu zumindest einen Kraftspeicher (44a; 44b; 44c; 44d) aufweist, **wobei** das Kraftunterstützungsmodul (38a; 38b; 38c; 38d) ein Betätigungsgetriebe (46a; 46b; 46c; 46d) mit einem beweglich gelagerten Kurvenelement (48a; 48b; 48c: 48d) aufweist, wobei das beweglich gelagerte Kurvenelement (48a; 48b; 48c) als eine drehbar gelagerte Nockenscheibe ausgebildet ist, das eine Nockenbahn (50a) ausbildet und dazu vorgesehen ist, die Unterstützungskraft (50a) in einer Abhängigkeit einer Verstellposition zu variieren, wobei das als Nockenscheibe ausgebildete Kurvenelement (48a; 48b; 48c) einen Grundkreis (54a) aufweist, wobei die Nockenbahn (50a; 50b; 50c) von einer in Umfangsrichtung verlaufenden Kurvenbahn (52a; 52b; 52c) gebildet ist, die variierende Abstände zu dem Grundkreis (54a) aufweist, **dadurch gekennzeichnet, dass** das Betätigungsgetriebe (46a; 46b; 46c; 46d) ein Betätigungselement (58a; 58b; 58c; 58d) aufweist, das dazu vorgesehen ist, eine von dem Kraftspeicher (44a; 44b; 44c; 44d) bereitgestellte Betätigungskraft (42a) auf die Nockenbahn (50a; 50b; 50c; 50d) des Kurvenelements (48a; 48b; 48c: 48d) zu übertragen, wobei das Kraftunterstützungsmodul (38a; 38b; 38c) ein schwenkbar gelagertes Hebelelement (60a; 60b; 60c) aufweist, das dazu vorgesehen ist, eine Betätigungskraft von dem Kraftspeicher (44a; 44b; 44c) auf das Betätigungselement (58a; 58b; 58c) zu übertragen.

2. Flugzeugsitzvorrichtung nach Anspruch 1, **dadurch gekennzeichnet, dass** eine Unterstützungskraft (40a) in Abhängigkeit eines Winkels der Nockenbahn (50a; 50b; 50c; 50d) positiv oder negativ ausgebildet ist.

3. Flugzeugsitzvorrichtung nach einem der vorhergehenden Ansprüche, **dadurch gekennzeichnet, dass** eine von dem Kraftspeicher (44a; 44b; 44c) auf die Nockenbahn (50a; 50b; 50c) des Kurvenelements (48a; 48b; 48c) ausgeübte Betätigungskraft (42a) auf einen Rotationsmittelpunkt des Kurvenelements (48a; 48b; 48c) ausgerichtet ist.

4. Flugzeugsitzvorrichtung nach einem der vorhergehenden Ansprüche, **gekennzeichnet durch** zumindest eine Kopplungseinheit (64a; 64b; 64c; 64d), die das Kraftunterstützungsmodul (38a; 38b; 38c; 38d) und das Verstellmodul (20a; 20b; 20c; 20d) miteinander funktional koppelt.

5. Flugzeugsitzvorrichtung nach Anspruch 4, **dadurch gekennzeichnet, dass** die Kopplungseinheit (64a) zumindest ein Umschlingungselement (66a) aufweist.

6. Flugzeugsitzvorrichtung nach Anspruch 3, **dadurch gekennzeichnet, dass** die Kopplungseinheit (64b; 64c) als eine Zahnradübersetzung ausgebildet ist.

7. Flugzeugsitzvorrichtung nach einem der vorhergehenden Ansprüche, **dadurch gekennzeichnet, dass** das Verstellmodul (20a) zumindest einen drehbar gelagerten Haltearm (22a) aufweist, an dessen einem Ende die Funktionseinheit (18a) angeordnet ist und an dessen anderem Ende das Kraftunterstützungsmodul (38a) angeordnet ist.

8. Flugzeugsitzvorrichtung nach einem der vorhergehenden Ansprüche, **dadurch gekennzeichnet, dass** die Funktionseinheit (18a) als ein Bildschirm ausgebildet ist.

9. Flugzeugsitzvorrichtung nach einem der vorhergehenden Ansprüche, **dadurch gekennzeichnet, dass** die Funktionseinheit (18c) als ein Flugzeugsitzelement (80c) ausgebildet ist, das zumindest einen Teil einer Sitzabstützfläche ausbildet.

10. Flugzeugsitz mit einer Flugzeugsitzvorrichtung nach einem der vorhergehenden Ansprüche.

## Claims

1. An aircraft seat device with a functional unit (18a; 18b; 18c; 18d), with an adjustment module (20a; 20b; 20c; 20d), by means of which the functional unit (18a; 18b; 18c; 18d) can be adjusted at least between a first position and a second position, with a force support module (38a; 38b; 38c; 38d), which is configured to exert a support force (40a) on the adjustment module (20a; 20b; 20c; 20d) in an actuated state, in order to support an adjustment movement of the functional unit (18a; 18b; 18c; 18d) between the first position and the second position, wherein the force support module (38a; 38b; 38c; 38d) has at least one force accumulator (44a; 44b; 44c; 44d) for this purpose, **wherein** the force support module (38a; 38b; 38c; 38d) has an actuating gear (46a; 46b; 46c; 46d) with a movably mounted cam element (48a; 48b; 48c; 48d), wherein the movably mounted cam element (48a; 48b; 48c) is embodied as a rotatably mounted cam disc, which forms a cam track (50a) and is configured to vary the support force (50a) as a function of an adjustment position, wherein the cam element (48a; 48b; 48c) embodied as a cam disc has a base circle (54a), wherein the cam track (50a; 50b; 50c) is formed by a cam track (52a; 52b; 52c) running in the circumferential direction, which has varying distances from the base circle (54a), **characterized in that** the actuating gear (46a; 46b; 46c; 46d) has an actuating element (58a; 58b; 58c; 58d), which is configured to transmit an actuating force (42a) provided by the force accumulator (44a; 44b; 44c; 44d) to the cam track (50a; 50b; 50c; 50d) of the cam element (48a; 48b; 48c; 48d), wherein the force support module (38a; 38b; 38c) has a pivotably mounted lever element (60a; 60b; 60c), which is configured to transmit an actuating force from the force accumulator (44a; 44b; 44c) to the actuating element (58a; 58b; 58c).

2. The aircraft seat device according to claim 1, **characterized in that** a support force (40a) is positive or negative as a function of an angle of the cam track (50a; 50b; 50c; 50d).

3. The aircraft seat device according to any one of the preceding claims, **characterized in that** an actuating force (42a) exerted by the force accumulator (44a; 44b; 44c) on the cam track (50a; 50b; 50c) of the cam element (48a; 48b; 48c) is aligned with a center of rotation of the cam element (48a; 48b; 48c).

4. The aircraft seat device according to any one of the preceding claims, **characterized by** at least one coupling unit (64a; 64b; 64c; 64d), which functionally couples the force support module (38a; 38b; 38c; 38d) and the adjustment module (20a; 20b; 20c; 20d) to one another.

5. The aircraft seat device according to claim 4, **characterized in that** the coupling unit (64a) has at least one wrap-around element (66a).

6. The aircraft seat device according to claim 3, **characterized in that** the coupling unit (64b; 64c) is embodied as a gearwheel transmission.

7. The aircraft seat device according to any one of the preceding claims, **characterized in that** the adjustment module (20a) has at least one rotatably mounted holding arm (22a), at one end of which the functional unit (18a) is arranged and at the other end of which the force support module (38a) is arranged.

8. The aircraft seat device according to any one of the preceding claims, **characterized in that** the functional unit (18a) is embodied as a screen.

9. The aircraft seat device according to any one of the preceding claims, **characterized in that** the functional unit (18c) is embodied as an aircraft seat element (80c), which forms at least a part of a seat support surface.

10. An aircraft seat having an aircraft seat device according to any one of the preceding claims.

## Revendications

1. Dispositif de siège d'avion comprenant une unité fonctionnelle (18a; 18b; 18c; 18d), comprenant un module de réglage (20a; 20b; 20c; 20d) par le biais duquel l'unité fonctionnelle (18a; 18b; 18c; 18d) peut être réglée au moins entre une première position et une deuxième position, comprenant un module d'assistance de force (38a; 38b; 38c; 38d) qui est prévu pour exercer, dans un état actionné, une force d'assistance (40a) sur le module de réglage (20a; 20b; 20c; 20d) afin d'assister un mouvement de réglage de l'unité fonctionnelle (18a; 18b; 18c; 18d) entre la première position et la deuxième position, le module d'assistance de force (38a; 38b; 38c; 38d) présentant à cet effet au moins un accumulateur de force (44a; 44b; 44c; 44d), le module d'assistance de force (38a; 38b; 38c; 38d) présentant un mécanisme d'actionnement (46a; 46b; 46c; 46d) avec un élément de came (48a; 48b; 48c; 48d) monté de manière mobile, l'élément de came (48a; 48b; 48c) monté de manière mobile étant réalisé sous forme de disque de came monté de manière rotative qui réalise une piste de came (50a) et étant prévu pour faire varier la force d'assistance (50a) en fonction d'une position de réglage, l'élément de came (48a; 48b; 48c) réalisé sous forme de disque de came présentant un cercle de base (54a), la piste de came (50a; 50b; 50c) étant formée par une piste de came (52a ; 52b ; 52c) s'étendant dans la direction périphérique, qui présente des distances variables par rapport au cercle de base (54a), **caractérisé en ce que** le mécanisme d'actionnement (46a; 46b; 46c; 46d) présente un élément d'actionnement (58a; 58b; 58c; 58d) qui est prévu pour transmettre une force d'actionnement (42a) fournie par l'accumulateur de force (44a; 44b; 44c; 44d) à la piste de came (50a; 50b; 50c; 50d) de l'élément de came (48a; 48b; 48c; 48d), le module d'assistance de force (38a; 38b; 38c) présentant un élément de levier (60a; 60b; 60c) monté de manière pivotante qui est prévu pour transmettre une force d'actionnement de l'accumulateur de force (44a; 44b; 44c) à l'élément d'actionnement (58a; 58b; 58c).

2. Dispositif de siège d'avion selon la revendication 1, **caractérisé en ce qu'**une force d'assistance (40a) est réalisée de manière positive ou négative en fonction d'un angle de la piste de came (50a; 50b; 50c; 50d).

3. Dispositif de siège d'avion selon l'une quelconque des revendications précédentes, **caractérisé en ce qu'**une force d'actionnement (42a) exercée par l'accumulateur de force (44a; 44b; 44c) sur la piste de came (50a; 50b; 50c) de l'élément de came (48a; 48b; 48c) est orientée vers un centre de rotation de l'élément de came (48a; 48b; 48c).

4. Dispositif de siège d'avion selon l'une quelconque des revendications précédentes, **caractérisé par** au moins une unité de couplage (64a; 64b; 64c; 64d) qui couple fonctionnellement le module d'assistance de force (38a; 38b; 38c; 38d) et le module de réglage (20a; 20b; 20c; 20d) l'un à l'autre.

5. Dispositif de siège d'avion selon la revendication 4, **caractérisé en ce que** l'unité de couplage (64a) présente au moins un élément d'enroulement (66a).

6. Dispositif de siège d'avion selon la revendication 3, **caractérisé en ce que** l'unité de couplage (64b; 64c) est réalisée sous forme de démultiplication par engrenage.

7. Dispositif de siège d'avion selon l'une quelconque des revendications précédentes, **caractérisé en ce que** le module de réglage (20a) présente au moins un bras de maintien (22a) monté de manière rotative, à l'une des extrémités duquel est disposée l'unité fonctionnelle (18a) et à l'autre extrémité duquel est disposé le module d'assistance de force (38a).

8. Dispositif de siège d'avion selon l'une quelconque des revendications précédentes, **caractérisé en ce que** l'unité fonctionnelle (18a) est réalisée sous forme d'écran.

9. Dispositif de siège d'avion selon l'une quelconque des revendications précédentes, **caractérisé en ce que** l'unité fonctionnelle (18c) est réalisée sous forme d'élément de siège d'avion (80c) qui forme au moins une partie d'une surface d'appui de siège.

10. Siège d'avion comprenant un dispositif de siège d'avion selon l'une quelconque des revendications précédentes.
